# FASCICULE DE BREVET EUROPEEN

(11) **EP 0 354 102 B1**
(45) Date de publication et mention de la délivrance du brevet: **19.01.1994**
(21) Numéro de dépôt: 89402143.5
(22) Date de dépôt: 27.07.1989
(51) Int. Cl.: B60R 25/04

(54) **Système d'antivol électronique pour véhicle à moteur**
Elektronisches Diebstahlschutzsystem für Kraftfahrzeug
Electronic anti-theft system for a motor vehicle

(30) Priorité: 29.07.1988 FR 8810237
(43) Date de publication de la demande: 07.02.1990
(73) Titulaire: REGIE NATIONALE DES USINES RENAULT, 92109 Boulogne-Billancourt (FR)
(72) Inventeur: Lefevre, Rémi, F-75017 Paris (FR); Bourbonneux, Vincent, F-92700 Colombes (FR); Lagoutte, Jean-Louis, F-78280 Guyancourt (FR)
(74) Mandataire: Saint Martin, René

(56) Documents cités:
- EP-A- 0 203 262
- DE-A- 3 624 707
- FR-A- 2 545 632
- US-A- 4 477 874

## Description

La présente invention se rapporte à un système d'antivol électronique pour véhicule à moteur à combustion interne muni d'un système d'allumage-injection électronique et d'un dispositif de verrouillage des portes à télécommande infrarouge comprenant un boîtier émetteur infrarouge portatif et un boîtier récepteur infrarouge relié par une liaison au microprocesseur du calculateur de l'allumage injection électronique auquel est associée une mémoire programmable effaçable.

Un dispositif électronique connu de verrouillage et de déverrouillage des portes d'un véhicule par émission de rayons infrarouges à impulsions codées comprend un boîtier émetteur portatif, à piles, émettant des impulsions selon un code propre à chaque boîtier et un boîtier récepteur, placé à bord du véhicule ayant une cellule captant les impulsions infrarouges à travers les vitres du véhicule et comparant le code reçu au code qu'il a en mémoire. En cas de coïncidence, le boîtier récepteur autorise le déverrouillage électrique des portes du véhicule. Ce dispositif n'assure pas une protection parfaite contre le vol puisqu'il ne concerne que le verrouillage des portes.

Par la publication FR-A-2 545 632, on connaît un système antivol destiné à verrouiller un élément capable de reconnaître un message numérique codé. Ce système comporte un émetteur et un dispositif capable d'engendrer ce message numérique et de l'envoyer vers ledit élément lorsqu'il a reconnu un code d'autorisation de la part de l'émetteur. Ce système a pour principal inconvénient de ne prévoir aucune possibilité de défaillance de la part de ses organes constitutifs, ou de l'utilisateur.

La présente invention a pour but de réaliser un système antivol agissant par verrouillage du calculateur d'allumage-injection électronique. Elle propose un système antivol intégrant les possibilités de défaillance mentionnées plus haut.

L'invention concerne un système d'antivol électronique pour véhicule à moteur à combustion interne doté d'un dispositif de verrouillage et de déverrouillage des portes de télécommande infrarouge, comprenant un boîtier émetteur infrarouge portatif, un boîtier récepteur infrarouge muni d'un microprocesseur et d'une mémoire, et un calculateur muni d'un microprocesseur associé à une mémoire électronique programmable effaçable, le dispositif de télécommande infrarouge déclenchant l'émission d'une trame codée par le microprocesseur du boîtier et sa transmission au microprocesseur du calculateur, par l'intermédiaire d'une liaison, le microprocesseur du boîtier comparant le code émis par le boîtier émetteur avec le contenu de sa mémoire.

Ce système est caractérisé par les caractéristiques techniques définies dans la deuxième partie de la revendication.

D'autres caractéristiques et avantages de l'invention apparaîtront dans la description qui suit, illustrée par les figures suivantes qui représentent :
- la figure 1 : un schéma d'ensemble du dispositif selon l'invention ;
- la figure 2 : un organigramme fonctionnel du programme principal de la fonction antivol selon l'invention.
- la figure 3 : un organigramme du programme réalisant la surveillance de la liaison entre le boitier récepteur et le calculateur.

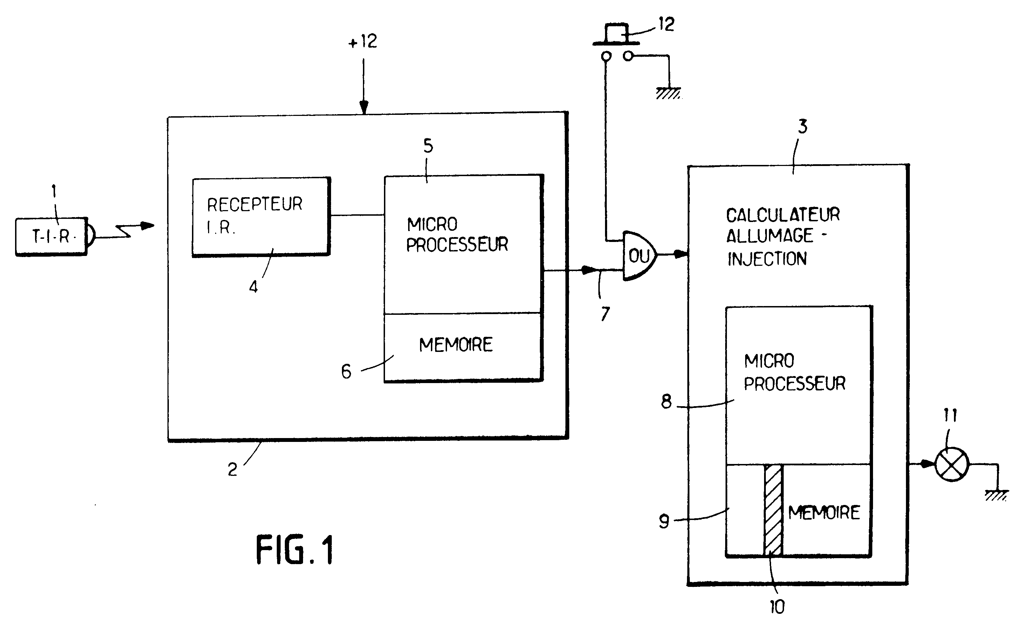

Sur la figure 1 sont représentés le boîtier 1 émetteur et le boîtier 2 récepteur du dispositif de télécommande infrarouge et en 3 le calculateur d'allumage-injection électronique. Le Boîtier 1 émet des impulsions infrarouges selon un code déterminé, qui sont destinées à être reçues par la partie réceptrice 4 du boîtier 2. Ce boîtier 2 comporte de plus un microprocesseur programmable 5 associé à une mémoire 6 effaçable électroniquement, dite EEPROM. Le contenu de la mémoire doit être identique au code émis par le boitier 1. Un fil de liaison série 7 relie le microprocesseur 5 du boîtier récepteur 2 au calculateur d'allumage-injection 3 qui comprend un microprocesseur 8 et une mémoire 9 EEPROM intégrée ou non à ce dernier.

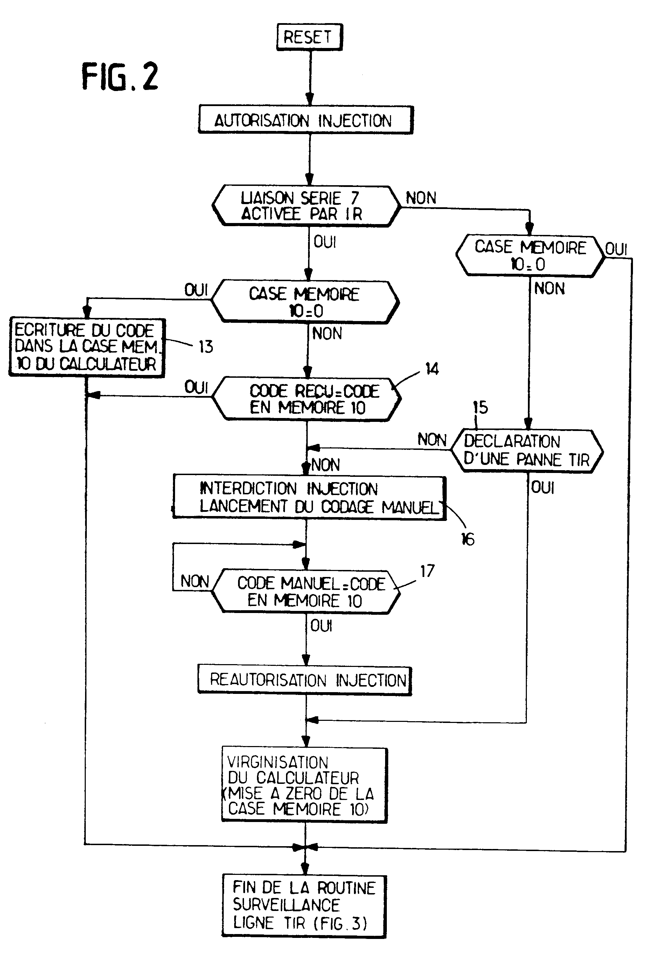

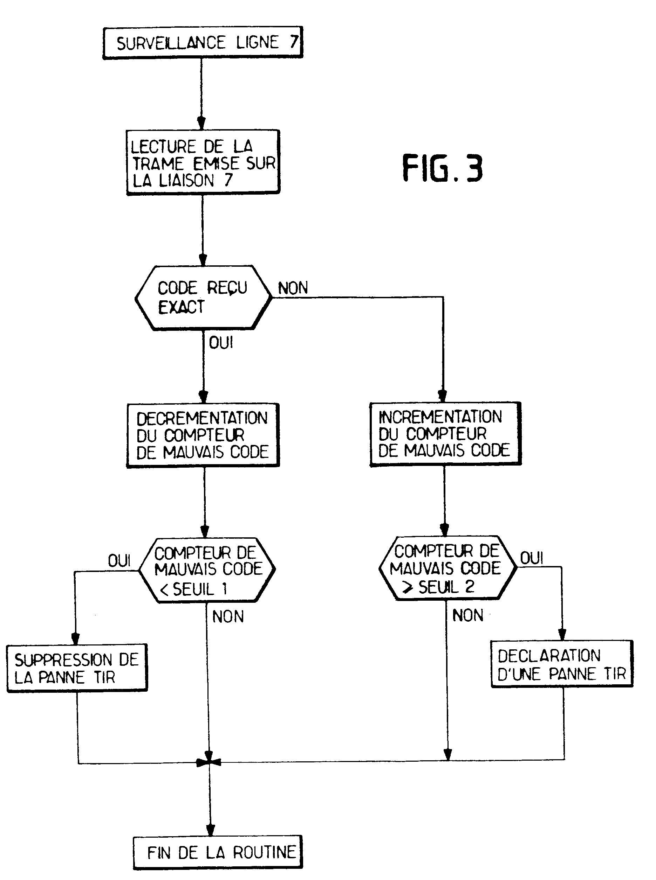

Le procédé de protection contre le vol d'un véhicule automobile mis en oeuvre à partir d'un dispositif précédemment décrit est le suivant, illustré par les organismes des figures 2 et 3. La figure 2 montre l'organigramme principal. La figure 3 montre l'organigramme du programme implanté dans le microprocesseur 8 et réalisant la surveillance de la liaison 7.

Dans une première phase, dite d'initialisation, le microprocesseur 8 du calculateur électronique 3 d'allumage-injection possède, dans sa mémoire EEPROM 9, une case 10 donnée contenant la valeur 0. Tant que cette case mémoire 10 est à 0, le calculateur d'injection 3 est déverrouillé, c'est-à-dire qu'après mise sous contact du démarreur, il peut exécuter son programme d'injection prévu.

Dès que le boîtier 1 émet des impulsions infrarouges selon un code correspondant à la mémoire 6 du boitier 2, le boîtier 2 envoie en permanence, par le fil de liaison série 7, une trame rapide contenant un code au calculateur d'injection 3, qui met alors ce code dans la case mémoire 10 dont le contenu est ainsi changé (symbole 13 de la figure 2). A partir de cet instant, le dispositif de télécommande infrarouge et le calculateur d'injection sont appariés.

Lorsque ensuite le boîtier émetteur 1 va envoyer au boîtier récepteur 2 un signal infrarouge de fermeture des portes du véhicule, ce boîtier 2 cesse d'envoyer la trame au calculateur d'injection 3.

Deux cas peuvent se présenter :
- Premièrement, en fonctionnement normal, le conducteur du véhicule utilise le dispositif à télécommande infrarouge pour le déverrouillage des portes et ce dernier émet alors en permanence sur la liaison série 7 une trame rapide contenant un code vers le calculateur 3 d'allumage-injection.

Un des intérêts de l'invention réside dans le fait que le calculateur 3 interdit l'injection ou l'allumage si le code reçu par la liaison 7 est différent de celui qu'il a mémorisé dans la case mémoire 10 symbole 14 - figure 2).

Ainsi la détection du code reçu par la liaison 7 n'engendre aucun retard sur l'initialisation nécessaire à la mise sous tension du calculateur 3 ainsi qu'à la mise en route du moteur par le même calculateur 3. La fonction antivol devient ainsi complètement transparente dans la mise en route du moteur par rapport à un calculateur normal.

En cas de parasitage du calculateur 3 lorsque le moteur tourne avec pour conséquence, un reset, le calculateur 3 peut relancer immédiatement son programme d'injection et d'allumage pour ne pas avoir de perturbation au niveau du fonctionnement moteur.

La trame, contenant le code, envoyée par le boîtier 2 au calculateur 3 est émise en permanence par l'intermédiaire de la liaison 7 à partir du moment où le récepteur IR 4 du boîtier 2 est activé par le boîtier 1.

Il es impératif qu'à la mise en route du véhicule (+ 12 volts après contact présent sur le boîtier 2), la trame émise sur la liaison 7 ne puisse plus être interrompue par le boîtier 1 ou autres. Ce point est réalisé grâce au microprocesseur du boitier 2.

En cas de reset moteur tournant, la trame étant émise en permanence et ne pouvant pas être interrompue le calculateur 3 peut ainsi reconnaître le code envoyé par la liaison 7 et restera déverrouillée.

Se cela n'était pas réalisé par notre système le calculateur se verrouillerait et entraînerait un arrêt du véhicule, ce qui ne serait pas acceptable sur un véhicule de série.

Une fois déverrouillé, le calculateur 3 surveille en permanence le bon fonctionnement de la liaison 7, ce qui permet au calculateur 3 de faire un auto diagnostic de ladite liaison 7.

Si pour des raisons diverses (fil conducteur de liaison 7 débranché suite à des vibrations, panne du boîtier 2, etc...) le calculateur 3 ne reçoit plus la trame émise par la liaison 7, ledit calculateur 3 mémorisera la panne et prendra ses dispositions, lors de la prochaine mise en route du véhicule pour que ledit calculateur 3 ne reste pas verrouillé (symbole 15 - figure 2). Dans ce cas la fonction antivol n'est plus active, mais l'utilisateur du véhicule en sera informé par l'intermédiaire d'un voyant.

En cas de reset, moteur tournant, la panne étant mémorisée, le calculateur 3 ne pourra pas se verrouiller.

Deuxièmement, les portes sont déverrouillées par la clé habituelle et non par la télécommande infrarouge, pour différentes raisons telles que panne de télécommande, piles du boîtier émetteur usées, perte de ce boîtier..., alors qu'elles avaient été verrouillées par télécommande infrarouge, dans ce cas, il faut envoyer par un autre moyen le code mémorisé dans le calculateur 3 d'allumage-injection pour le déverrouiller, ce code devant être connu par le conducteur du véhicule grâce, par exemple, à son écriture sur une étiquette autocollante détachable collée sur le boîtier émetteur 1 infrarouge à la livraison du véhicule. Connaissant ce code, le conducteur met le contact puis introduit le code en agissant par exemple sur la pédale d'accélérateur - les positions pied à fond ou pied levé étant reconnues par le calculateur 3 - conjointement à la manipulation d'un bouton 12 du tableau de bord, d'un appel de phare ou d'une commande de climatisation.

Dans le cas où le calculateur d'allumage-injection 3 reçoit une trame manuelle avec le même code que celui présent dans sa case mémoire 10, il arrête l'exécution du programme d'injection et remplace le code mémorisé par la valeur 0 dans la case mémoire 10 (symboles 16 et 17 - figure 2). Ainsi, le calculateur d'injection est déverrouillé tant qu'une trame rapide codée ne lui parvient pas par l'intermédiaire de la télécommande infrarouge.

Le verrouillage du système d'allumage-injection électronique est obligatoirement lié au verrouillage des portes du véhicule par l'emploi du boîtier émetteur infrarouge, de sorte que le conducteur peut continuer à utiliser son véhicule qui n'est plus protégé, sans avoir à introduire "à la main" le code puisque celui-ci n'est plus mémorisé. En case de calage du véhicule, il pourra aisément redémarrer de même à chaque ouverture des portes par la clé.

Bien que l'on ait dit auparavant que le dispositif de télécommande infrarouge et le calculateur électronique d'allumage-injection étaient appariés quand celui-ci avait reçu le code émis par celui-là, on peut garder le même calculateur quand il faut changer la télécommande infrarouge. Dans ce cas, on déverrouille le calculateur 3 d'injection en introduisant à la main le code de sorte que la case mémoire 10 est remise à zéro et lorsque la nouvelle télécommande infrarouge avec un nouveau code est utilisée, ce code est alors envoyé par une trame rapide dans le microprocesseur 8 du calculateur 3 et est mémorisé en case 10.

Afin de prévenir le conducteur de l'état de verrouillage du système d'allumage-injection, il est prévu de l'indiquer par un voyant 11 au tableau de bord par exemple et par un signal envoyé sur la liaison diagnostic du calculateur 3.

Pour éviter d'avoir à changer le calculateur d'allumage-injection lorsqu'il est verrouillé et qu'il est impossible d'activer la télécommande ou que le code manuel est perdu, il faut prévoir :
- soit lire le code, mémorisé dans la case 10 de la mémoire EEPROM du calculateur 3 sur la liaison diagnostic du calculateur par la valise de diagnostic que possède le garagiste ;
- soit remettre à zéro la case mémoire 10 par la valise de diagnostic ;
- soit consulter un fichier central où sont répertoriés les codes par numéro de série des véhicules.

Un avantage de l'invention réside dans le fait que tous les calculateurs d'allumage-injection prévus pour un type de véhicule donné sont identiques, que le véhicule soit équipé ou non d'un dispositif de verrouillage des portes et, grâce à cela, les véhicules équipés d'un dispositif de télécommande infrarouge d'ouverture des portes bénéficient automatiquement d'un dispositif antivol selon l'invention.

L'invention ne se limite évidemment pas aux modes de réalisation décrits et représentés mais comprend également tous les équivalents techniques des moyens décrits et leurs combinaisons effectuées suivant l'esprit de l'invention et mises en oeuvre dans le cadre des revendications qui suivent.

## Revendications

1. Système d' antivol électronique pour véhicule à moteur à combustion interne doté d'un dispositif de verrouillage et de déverrouillage des portes de télécommande infrarouge comprenant un boîtier émetteur infrarouge portatif (1), un boîtier récepteur infrarouge (2) muni d'un microprocesseur (5) et d'une mémoire (6), et un calculateur (3) muni d'un microprocesseur (8) associé à une mémoire électronique programmable effaçable (9), le dispositif de télécommande infrarouge déclenchant l'émission d'une trame codée par le microprocesseur (5) du boîtier (2) et sa transmission au microprocesseur (8) du calculateur (3), par l'intermédiaire d'une liaison (7), le microprocesseur (5) du boîtier (2) comparant le code émis par le boîtier émetteur (1) avec le contenu de sa mémoire (6), caractérisé en ce que une case (10) de la mémoire programmable (9) contenant la valeur 0̸ dans une phase d'initialisation, le calculateur (3) met en mémoire dans la case (10) le premier code reçu, continue à lire le code émis en permanence par le microprocesseur (5) du boîtier (2), le compare à un code mémorisé dans la case (10) de sa mémoire (9) de façon à interdire l'injection ou l'allumage si les codes sont différents, et en ce que le calculateur (3) détecte la présence ou non d'une trame sur la liaison (7), de façon à lire la case mémoire (10) en l'absence de trame, et à interdire l'injection ou l'allumage si celle-ci est différente de zéro et si aucune panne n'a été détectée auparavant par le calculateur (3).

## Claims

1. Electronic anti-theft device for a vehicle with an internal combustion engine equipped with a remote-controlled, infrared, door locking and unlocking device, comprising a portable infrared transmitter (1), an infrared receiver (2) provided with a microprocessor (5) and a memory (6), and a controller (3) provided with a microprocessor (8) which is combined with an erasable electronic programmable memory (9), whereby the remote-controlled, infrared device activates the emission of a coded pattern by the micro-processor (5) of the receiver (2) and its transmission to the micro-processor (8) of the controller (3) by means of a link (7), the microprocessor (5) of the receiver (2) comparing the code transmitted by the transmitter (1) with the contents of its memory (6), characterised in that one segment (10) of the programmable memory contains the value 0 during an initialisation phase, the controller (3) stores in the segment (10) the first code it receives and then continues to read the code permanently transmitted by the micro-processor (5) of the receiver (2) and compares it to the code stored in the segment (10) of its memory (9), whereby if the codes are different, it prevents the injection or ignition, and in that the controller (3) detects the presence or not of a coded pattern on the link, so that in the absence of a coded pattern, it reads the memory block (9) and prevents injection or ignition if it is other than zero and if no breakdown has been detected beforehand by the controller (3).

## Patentansprüche

1. Elektronische Diebstahlsicherung für ein mit einem Verbrennungsmotor versehenes Kraftfahrzeug, das mit einer infrarotferngesteuerten Verriegelungs- und Entriegelungsanordnung der Türen versehen ist und die ein tragbares Infrarotsendergehäuse (1) aufweist, ein mit einem Mikroprozessor (5) und einem Speicher (6) versehenes Infrarotempfängergehäuse (2) aufweist und einen mit einem Mikroprozessor (8) versehenen Rechner (3) aufweist, der einem programmierbaren und löschbaren elektronischen Speicher (9) zugeordnet ist, wobei die Infrarotfernsteuerung das Aussenden einer codierten Signalfolge durch den Mikroprozessor (5) des Gehäuses (2) auslöst und zum Mikroprozessor (8) des Rechners (3) überträgt mittels einer Verbindung (7), während der Mikroprozessor (5) des Gehäuses (2) den vom Sendergehäuse (1) ausgesandten Code mit dem Inhalt des Speichers (6) vergleicht, dadurch gekennzeichnet, daß ein Teil (10) des programmierbaren Speichers (9) den Wert 0 in einer Anfangsphase enthält und der Rechner (3) den ersten erhaltenen Code in den Teil (10) einschreibt und fortfährt, den ausgesandten Code zu lesen mittels des Mikroprozessors (5) des Gehäuses (2), diesen mit einem im Teil (10) des Speichers (9) gespeicherten Code derart vergleicht, daß keine Zündung oder Einspritzung erfolgt, wenn sich die Codes unterscheiden und daß der Rechner (3) das Vorhandensein oder Nichtvorhandensein einer Signalfolge in der Verbindung (7) feststellt, indem er bei Nichtvorhandensein der Signalfolge den Teil (10) des Speichers ausliest und die Einspritzung oder Zündung verhindert, wenn er sich von 0 unterscheidet und vorher vom Rechner (3) keine Panne festgestellt worden ist.
